(19) Europäisches Patentamt
European Patent Office
Office européen des brevets

(11) Publication number: **0 023 770**
**A1**

(12) **EUROPEAN PATENT APPLICATION**

(21) Application number: **80302277.1**

(22) Date of filing: **04.07.80**

(51) Int. Cl.³: **C 09 B 44/08,** C 07 D 401/04, C 07 D 417/04

(30) Priority: **02.08.79 GB 7927006**

(43) Date of publication of application: **11.02.81 Bulletin 81/6**

(84) Designated Contracting States: **CH DE FR GB IT LI NL**

(71) Applicant: **IMPERIAL CHEMICAL INDUSTRIES LIMITED, Imperial Chemical House Millbank, London SW1P 3JF (GB)**

(72) Inventor: **Parton, Brian, 11 Cleadon Drive South, Bury, Lancs BL8 1EJ (GB)**
Inventor: **Gordon, Paul Francis, 857 Edenfield Road, Norden, Rochdale Lancs (GB)**

(74) Representative: **Houghton, Malcolm John et al, Imperial Chemical Industries Limited Legal Department: Patents Thames House North Millbank, London SW1P 4QG (GB)**

(54) **Cationic pyridone azo dyestuffs, certain novel coupling components from which they are derived and processes for the manufacture of the dyestuffs and the coupling components.**

(57) The dyestuffs are prepared by diazotation of an amine, reaction with a pyridone coupling component carrying in the 3-position a 5- or 6-membered heterocyclic ring containing an o-nitrogen and an o-sulphur or second nitrogen atom and quaternisation. A further carbocyclic or heterocyclic ring may be fused to the first. The novel pyridone coupling components carry a 3-benzimidazole or a 3-benzthiazole substituent and are made by reacting a 3-cyano pyridone with an o-phenylene diamine or o-aminothiophenol in the presence of anhydrous aluminium trichloride.

The dyestuffs colour acrylic materials bright yellow shades of high tinctorial strength. They have good fastness properties and compatibility values.

EP 0 023 770 A1

The invention relates to water soluble azo dyestuffs useful for the colouration of paper and synthetic polymeric materials in the form of fibres, films, threads, tapes and textile materials generally and particularly for the colouration of polymers and copolymers of acrylonitrile and dicyanoethylene and also acid modified polyesters and polyamides.

According to the present invention there are provided azo dyestuffs, devoid of carboxylic acid and sulphonic acid groups, of the formula (I)

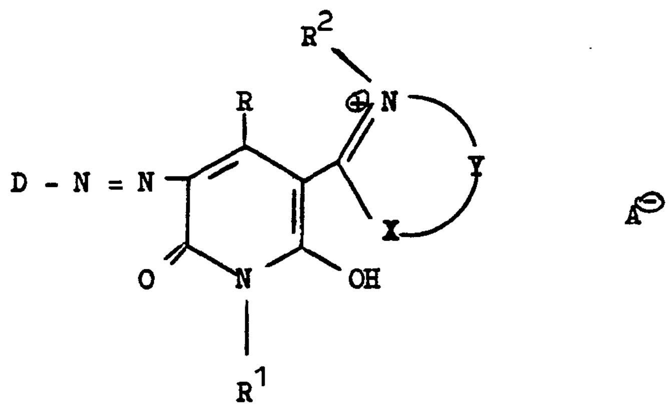

(I)

wherein D is an aromatic carbocyclic or aromatic heterocyclic radical, R is hydrogen, halogen, nitro, cyano, hydroxy, amino or an organic radical, $R^1$ is hydrogen or hydroxyl, an optionally substituted hydrocarbon or heterocyclic radical, but not hydroxyalkyl having 2 or more carbon atoms, or optionally substituted amino, acylamino, acyloxy or alkoxy, X is sulphur or $N-R^3$, Y is the residue of a 5- or 6-membered ring which may have fused thereto a further carbocyclic or heterocyclic ring except that when X is sulphur Y may not be orthophenylene, $R^2$ and $R^3$, which may be the same or different, are hydrogen, or optionally substituted alkyl, especially lower alkyl and particularly

hydroxyalkyl, cycloalkyl, alkenyl, aryl or aralkyl, and $A^-$ is an anion.

Dyestuffs of formula (I) in which X is oxygen have been found to be unstable and do not, therefore, form part of this invention.

D may be any aromatic carbocyclic or aromatic heterocyclic radical which may carry substituents such as those normally present in dyestuffs molecules.

Examples of aromatic carbocyclic radicals include optionally substituted benzene and naphthalene radicals.

Examples of aromatic heterocyclic radicals include optionally substituted thiazole, isothiazole, quinoline, furan, thiophene, pyrrole, pyridine, benzthiazole, triazole, thiadiazole, indazole, benzisothiazole, imidazole and benzimidazole radicals.

Examples of substituents which may be present in D include halogen atoms for example chloro, bromo and fluoro, hydroxy, alkoxy, especially lower alkoxy, for example methoxy and ethoxy, alkyl, especially lower alkyl, for example methyl, acylamino for example acetylamino, alkoxycarbonyl especially lower alkoxycarbonyl for example methoxycarbonyl, nitro, acyloxy for example acetoxy, aryloxy for example phenoxy, carbamoyl for example diethylaminocarbonyl, amino, alkylamino especially lower alkylamino, for example methylamino, alkylsulphonyl, especially lower alkylsulphonyl, phenoxy sulphonyl, trifluoromethyl, alkoxycarbonylamino, dialkylaminosulphamyl, monoalkylaminosulphamyl, sulphamyl, acyl for example acetyl, cyano, arylazo, for example phenylazo, and aryl for example phenyl.

When we use the term "lower" in relation to an alkyl containing group, we mean that the alkyl moiety contains from 1 to 4 carbon atoms.

D may also be substituted by groups having cationic groups incorporated therein, examples of such groups which may be present as substituents in D include the following:

$-SO_2-NH-CH_2-CH_2-\overset{+}{Py}$, $-CO-CH_2-\overset{+}{Py}$, $-NH-CO-CH_2-\overset{+}{Py}$,
$-CO-NH-CH_2-CH_2-CH_2-\overset{+}{N}-(CH_3)_3$, $-CO-O-CH_2-CH_2-\overset{+}{N}-(CH_3)_3$,
$-O-CH_2-CH_2-O-CO-CH_2-CH_2-\overset{+}{Py}$, $-NH-CO-CH_2-\overset{+}{S}-(C_2H_5)_2$
$-CO-CH_2-\overset{+}{S}-(CH_2-CH_2OH)_2$, $-O-CH_2-CH_2-\overset{+}{S}-(CH_3)-C_2H_5$,
$-CO-CH_2-\overset{+}{S}-(CH_3)-C_2H_5$, $-CO-CH_2-\overset{+}{S}=C-(NH_2)_2$,
$-O-CH_2-CH_2-S=\overset{+}{C}-[N-(CH_3)_2]_2$, $-NH-CO-CH_2-\overset{+}{S}-(CH_3)-C_2H_5$,
$-NH-CH=\overset{+}{N}-(CH_3)_2$, $O=C-NH-CH_2-\overset{+}{Py}$, $Ph-N-CO-CH_2-\overset{+}{Py}$, $-NH-CO-\overset{+}{V}$,
$-O-CH_2-CH_2-O-CO-\overset{+}{V}$, $=CH=N-\overset{+}{N}-(CH_3)_2$, $-NH-CO-CH=N-\overset{+}{N}-(CH_3)_3$,
$-O-CH_2-CH_2-\overset{+}{N}-(NH_2)-(CH_3)_2$, $-SO_2-NH-CH_2-CH_2-CH_2-\overset{+}{N}-(NH_2)-(CH_3)_2$,
$-SO_2-CH_2-CH_2-\overset{+}{N}-(NH_2)-(CH_3)_2$, $-CO-O-CH_2-CH_2-\overset{+}{N}-(NH_2)-(CH_3)_2$,
$-O-CH_2-CH_2-O-CO-CH_2\overset{+}{N}-(NH_2)-(CH_3)_2$, $-CH_2-CH_2-\overset{+}{N}-(NH_2)-(CH_3)_2$,
$-NH-CO-CH_2-\overset{+}{N}-(NH_2)-(CH_3)_2$, $-CH_2-\overset{+}{N}-(NH_2)-(CH_3)_2$,
$-CH_2-NH-CO-CH_2\overset{+}{N}-(NH_2)-(CH_3)_2$, $-CO-CH_2CH_2-\overset{+}{N}-(CH_3)_3$,
$-SO_2-NH-\overset{+}{N}-(CH_3)_3$, $-CO-NH-\overset{+}{N}-(CH_3)_3$, $-O-CH_2-CH_2-\overset{+}{N}-(CH_3)_3$,
$-S-CH_2-CH_2-\overset{+}{N}-(CH_3)_3$, $-O-CH_2-CH_2-\overset{+}{N}-(NH_2)-(CH_3)_2$,
$-S-CH_2-CH_2-\overset{+}{N}-(NH_2)-(CH_3)_2$, $-CO-CH_2-\overset{+}{N}-(CH_3)_3$, $-NH-CO-CH_2-\overset{+}{N}-(CH_3)_3$,
$-CO-CH_2-\overset{+}{P}-(CH_3)_2-Ph$, $-CH_2-\overset{+}{P}-(C_4H_9)_3$, $-CO-CH_2-\overset{+}{P}-(C_4H_9)_3$,
$-O-CH_2-CH_2-\overset{+}{P}-(C_4H_9)_3$, $-SO_2-CH_2-CH_2-\overset{+}{P}-(C_4H_9)_3$, $-CO-O-CH_2-CH_2-\overset{+}{P}-(C_4H_9)_3$
$-CH_2\overset{+}{Py}$, $-CH_2-CH_2-\overset{+}{N}-(CH_3)_3$, $-O-CH_2-CH_2-\overset{+}{Py}$, $-CO-CH_2-\overset{+}{W}$, $-NH-CO-CH_2-\overset{+}{W}$,
$-CO-CH_2-\overset{+}{D}$, $-NH-CO-CH_2-\overset{+}{D}$, $-CH_2-\overset{+}{D}$, $-O-CH_2-CH_2-OCH_2-CH_2-\overset{+}{G}$,
$-SO_2-NH-CH_2-CH_2-\overset{+}{V}$, $-SO_2-NH-CH_2-CH_2-\overset{+}{G}$, $-SO_2-NH-CH_2-CH_2-\overset{+}{W}$,
$-CO-CH_2-\overset{+}{M}$, $-NH-CO-CH_2-\overset{+}{M}$, $-SO_2-NH-CH_2-CH_2-\overset{+}{M}$, $-CH_2-\overset{+}{M}$,

3-trimethylammoniumylphenylazo, 4-pyridiniumacetyl-phenylazo, 4-(pyridinium-1-yl-acetylamino)phenylazo, 3-trimethylammoniumyl phenylcarbamoyl and 3-trimethylammoniumylphenylsulphamyl.

In the foregoing radicals the symbol Ph stands for the phenyl radical, $\overset{+}{Py}$ for the pyridinium radical, $\overset{+}{M}$ for the quinolinium radical, $\overset{+}{V}$ stands for the 1-methyl-3-pyridinium-3-yl radical, $\overset{+}{W}$ stands for the 4-N,N-dimethylaminopyridinium-1-yl radical, $\overset{+}{D}$ stands for the 2-methyl-pyridinium-1-yl radical and $\overset{+}{G}$ stands for the 1-methyl-pyridinium-4-yl radical.

We would also mention that D may have the formula (II):

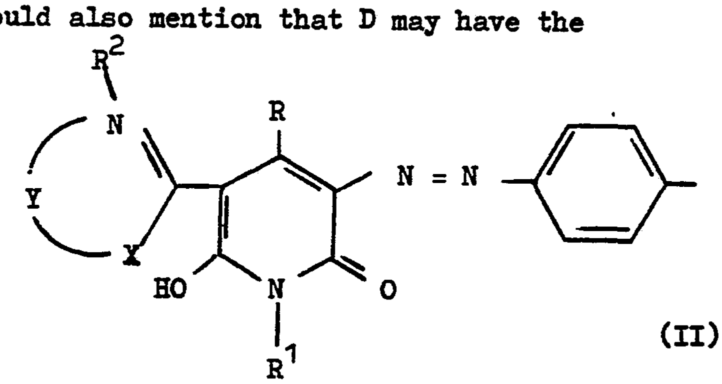

;

(II)

wherein R, $R^1$, $R^2$, X and Y have the meanings herein defined.

R is hydrogen, halogen especially chlorine and bromine, nitro, cyano, hydroxy, amino or an organic radical and examples of R include lower alkyl especially methyl, ethyl, n-propyl and n-butyl, hydroxy lower alkyl especially β-hydroxyethyl, lower alkoxy lower alkyl especially β-methoxy (or ethoxy)-ethyl, cyano lower alkyl especially β-cyanoethyl, carbethoxy lower alkyl especially carbethoxymethyl, acyl lower alkyl especially acetylmethyl, phenyl, chlorophenyl, lower alkoxy phenyl especially methoxyphenyl, benzyl, phenyl lower alkyl especially phenylethyl, cyclohexyl, 2-pyridyl, 2-thiazolyl, 1-piperidyl, 2-morpholinyl, lower alkoxy carbonyl especially methoxycarbonyl and ethoxycarbonyl,

carbamoyl, N,N-di lower alkylcarbamoyl especially N,N-dimethylcarbamoyl, N,N-di lower alkyl carbonamido especially N,N-diethylcarbonamido, lower alkoxy especially methoxy and ethoxy, di-lower alkylamino especially diethylamino, N-lower alkyl-benzylamino especially N-methyl-benzylamino, N-lower alkyl anilino especially N-methylanilino, anilino, lower alkoxycarbonyl lower alkyl especially methoxycarbonylmethyl, lower alkylsulphonyl lower alkyl especially methylsulphonylmethyl, anilino-carbonyl lower alkyl especially anilinocarbonylmethyl, cyano lower alkyl especially cyanomethyl, N,N-di-lower alkylaminocarbonyl lower alkyl especially N,N-dimethylamino-carbonylmethyl, N-nonylcarbamoyl, nonyloxycarbonyl, N-phenylcarbamyl, N-benzylcarbamyl, N,N-dibenzylcarbamoyl, 2-furyl, 2-thienyl, 2-pyrryl and phenoxy lower alkyl especially phenoxymethyl.

R is preferably lower alkyl especially methyl.

$R^1$ is hydrogen or hydroxy or an optionally substituted hydrocarbon or heterocyclic radical but not hydroxy alkyl having 2 or more carbon atoms, or optionally substituted amino, acylamino, acyloxy or alkoxy. Examples of $R^1$ include lower alkyl especially methyl, ethyl, n-propyl and n-butyl, lower alkoxy lower alkyl especially γ-methoxypropyl and β-methoxy (or ethoxy)-ethyl, cyano lower alkyl especially β-cyanoethyl, lower alkoxycarbonyl lower alkyl especially carbethoxymethyl, acyl lower alkyl especially acetylmethyl, phenyl, tolyl, chlorophenyl, lower alkoxyphenyl especially methoxyphenyl, benzyl, phenyl lower alkyl especially phenylethyl, cyclohexyl, 2-pyridyl, 2-thiazolyl, 1-piperidyl, 1-morpholinyl, di-lower alkylamino especially dimethylamino, 2-ethylhexyl, nonyl, dodecyl, alkylphenyl especially p-butylphenyl and p-dodecylphenyl, amino, acylamino especially acetylamino, lower alkylamino especially methylamino, acyl lower alkylamino especially acetyl methylamino, acyloxy especially acetoxy and lower alkoxy especially methoxy.

$R^1$ is preferably hydrogen or alkyl having from 1 to 6 carbon atoms especially lower alkyl.

$R^2$ and $R^3$, which may be the same or different, are hydrogen, or optionally substituted alkyl, cycloalkyl, aryl, alkenyl or aralkyl. Examples of $R^2$ include lower alkyl especially methyl, ethyl, propyl and butyl, chloro- or bromo-lower alkyl especially 2-chloroethyl, 2-bromoethyl, acyloxy lower alkyl especially 2-acetoxyethyl, lower alkenyl especially allyl, benzyl, cyclohexyl, phenyl lower alkyl especially 2-phenylethyl, carbamoyl lower alkyl especially 2-carbamoylethyl and 2-carbamoyl-2-methylethyl, lower alkoxy lower alkyl especially methoxyethyl, lower alkylcarbonyl lower alkyl especially methylcarbonylethyl, hydroxy lower alkyl especially 2-hydroxyethyl, cyano lower alkyl especially 2-cyanoethyl, acyl lower alkyl, lower alkoxycarbonyl lower alkyl and phenyl.

$R^2$ and $R^3$ are preferably lower alkyl or hydroxy lower alkyl. In particular they are the same and are methyl, ethyl or 2-hydroxyethyl.

As examples of the 5- or 6-membered ring of which Y is the residue, we would mention

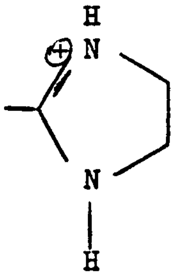 , 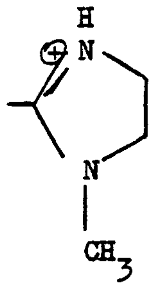 , 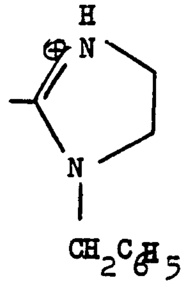 , 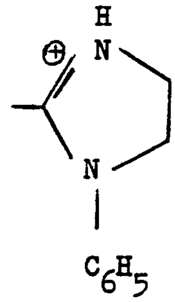 ,

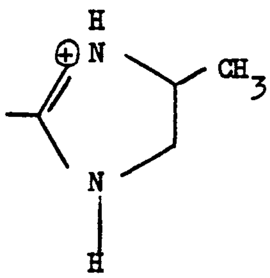 , 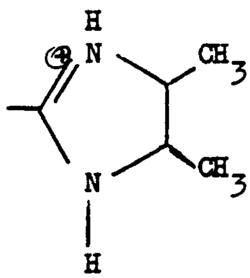 , 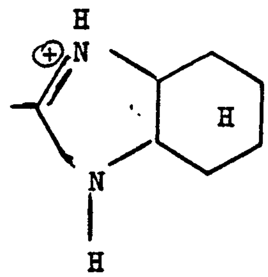 ,

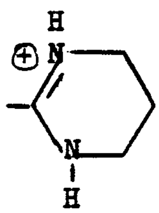 , 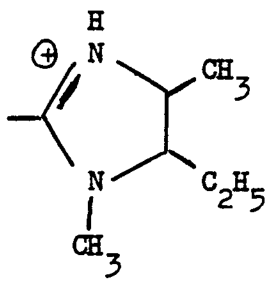 , 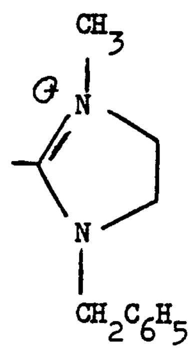 ,

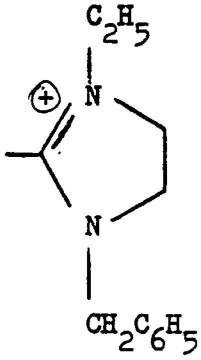 , 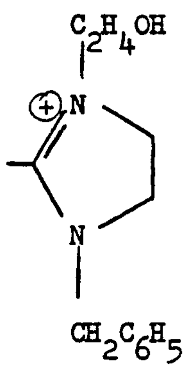 , 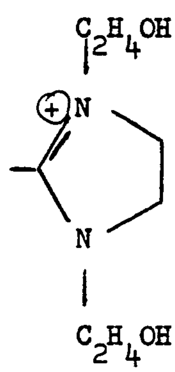 ,

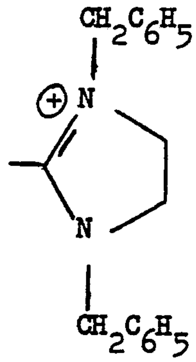 , 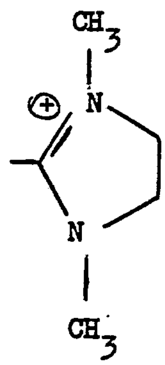 , 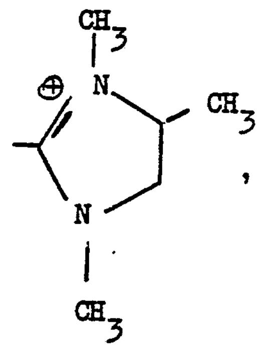 ,

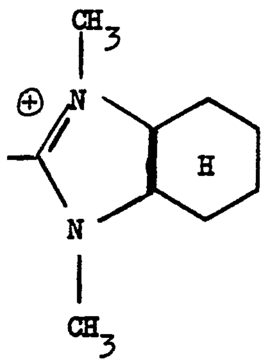 , 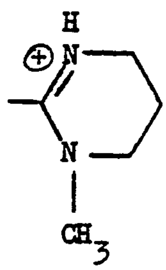 , 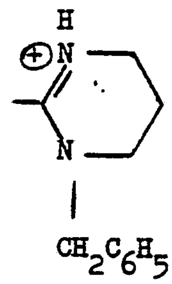 ,

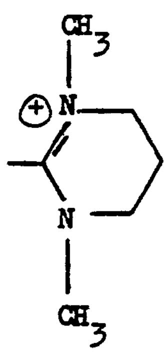 , 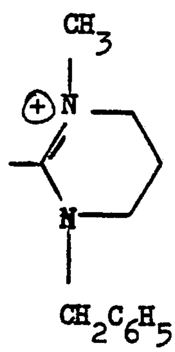 , 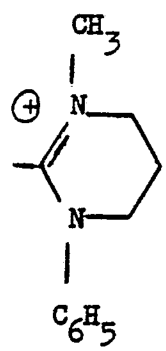 ,

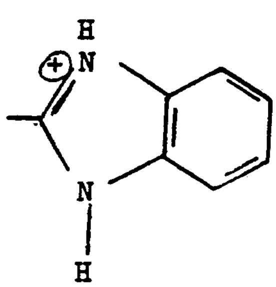 , 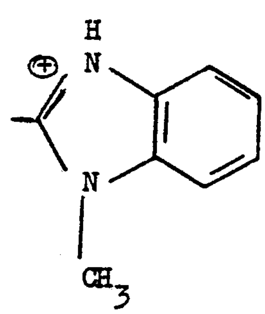 ,

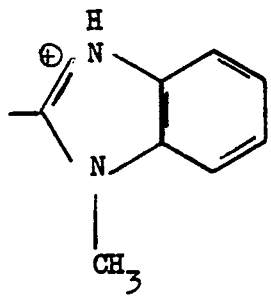 , 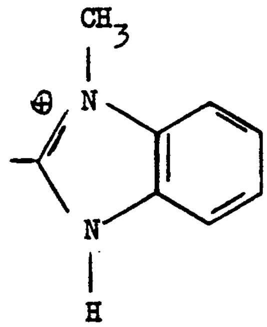 ,

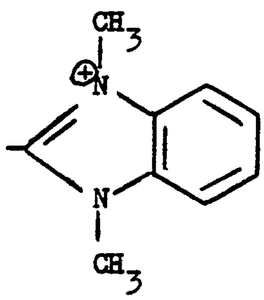 , 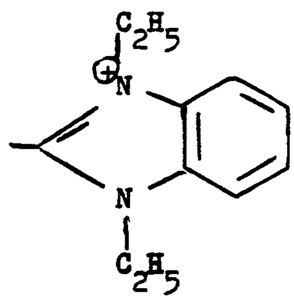 , 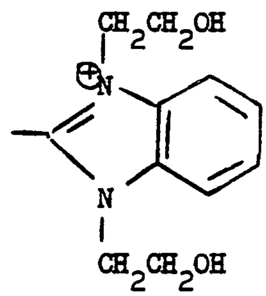 ,

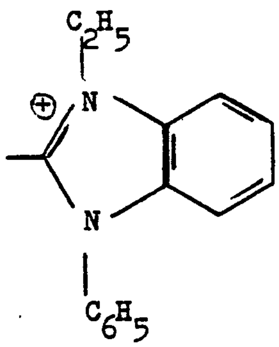 , 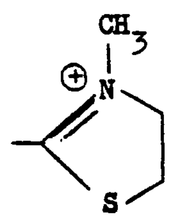

When Y carries a fused benzene ring, this ring may be substituted with one or more of the substituents normally to be found in dyestuff molecules. Examples of such substituents include those listed hereinbefore as substituents which may be present in D. Preferably Y is orthophenylene in which the benzene ring carries a substituent $R^4$. $R^4$ is preferably lower alkyl, especially methyl.

A preferred dyestuff has a cationic moiety of the formula:

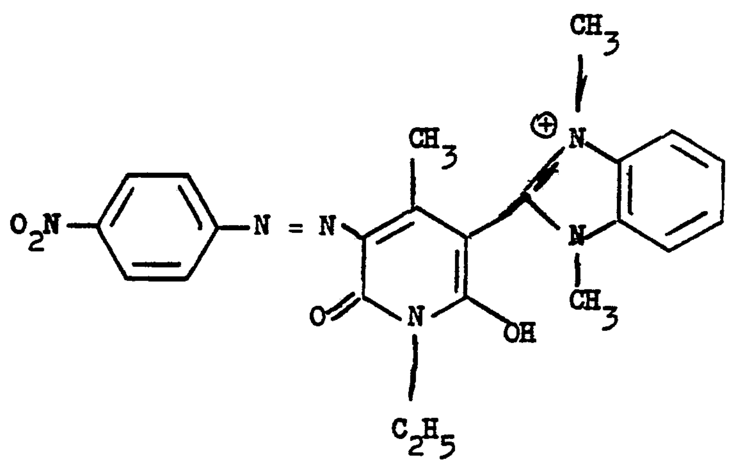

As anions represented by $A^-$ there may be mentioned, for example, anions of inorganic acids such as chloride, bromide, tetrachlorozincate, bisulphate, sulphate, tetrafluoroborate, sulphamate, nitrate, phosphate and fluoride and anions of organic acids such as methosulphate, ethosulphate, methyl sulphonate, p-tolyl sulphonate, acetate, oxalate, hydrogen oxalate and formate. In those cases where the anion is polyvalent the water-soluble dyestuffs will contain a corresponding molar proportion of the cationic part of the dyestuff.

Dd.30917 0023770

In another aspect of the present invention there is provided a process for the manufacture of dyestuffs of the present invention which comprises quaternising a compound of the formula (III):

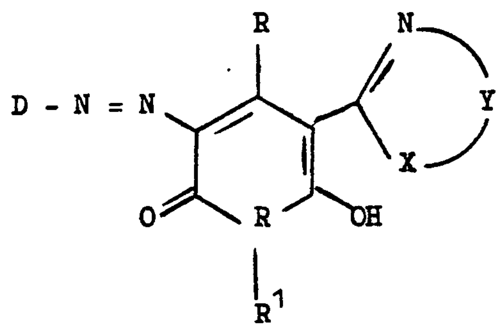

(III)

wherein D, R, $R^1$, X and Y are as hereinbefore defined.

When X is N-$R^3$ and $R^3$ is the same as $R^2$, alkylation and quaternisation are conveniently carried out at the same time, the amount of quaternising agent used being adjusted accordingly.

As examples of alkylating or quaternising agents there may be mentioned alkyl halides such as methyl, ethyl, propyl and butyl chlorides and the corresponding bromides, alkenyl halides such as allyl chloride or bromide, aralkyl halides such as benzyl chloride or bromide, dialkyl sulphates such as dimethyl sulphate, diethyl sulphate, dipropyl sulphate and dibutyl sulphate, alkyl esters of aryl sulphonates such as methyl and ethyl p-toluene sulphonate and other lower alkyl esters of strong mineral acids or organic sulphonates. Other agents may themselves carry substituents, for example chloropropionitrile, bromopropionamide and bromohydrin.

The reaction between the quaternising agent and the compound of the above formula may be carried out neat without addition of other solvents, or again may be carried out in an inert organic solvent such as benzene, toluene, xylene, chlorobenzene, nitrobenzene, acetone, carbontetrachloride, tetrachloroethane, perchloroethylene, chloroform, dimethyl formamide, acetonitrile, acetic acid, formic acid or 2-ethoxyethanol. The quaternisation may also be effected in aqueous phase optionally in the presence of an organic solvent. The quaternising agent may be used in considerable excess, for example up to 6 moles for each mole of dyestuff. Suitable temperatures are from 20° to 150°C and particularly 20-90°C. The inclusion of an acid binding agent is often beneficial. Such agents include magnesium oxide, sodium and potassium hydroxide, sodium and potassium carbonate, sodium and potassium bicarbonate, magnesium and calcium carbonate, potassium acetate or mixtures of such agents.

Quaternisation may also be carried out by reacting with, for example, acrylamide in an organic or mineral acid such as acetic, formic or hydrochloric acid or mixtures of these at between 50 and 100°C.

Quaternisation may also be carried out by reacting with ethylene oxide or its derivatives of formula:

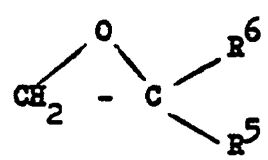

wherein $R^5$ and $R^6$ represent hydrogen or an optionally substituted lower alkyl group.

This reaction is carried out in a solvent in the presence of a mineral or organic acid which provides the anion $A^-$, at temperatures of 10° to 100°C and preferably 40-90°C. Suitable acids include sulphuric, hydrochloric, hydrobromic, phosphoric, benzenesulphonic, toluenesulphonic, formic, acetic or propionic. Such acids may also serve as solvent or may be used in admixture with each other or with other organic solvent such as dimethylformamide, acetonitrile, dioxan, tetrahydrofuran, chlorobenzene, toluene, xylene, nitrobenzene, acetone or methylethylketone.

When the reaction is effected in hydrophobic organic solvents the quaternised dyestuff is normally insoluble and may be isolated by filtration. If desired, the quaternised dyestuff may be isolated from aqueous solution by precipitation in the form of a salt such as tetrachlorozincate obtained by adding zinc chloride to the aqueous solution.

As a result of the quaternisation the dyestuff may be obtained for example in the form of the chloride, bromide or methosulphate according to the alkylating agent used. If the dyestuff is required as the salt of a different anion, then one anion may be replaced by another by known methods, for example metathesis.

Compounds for use as starting materials in the above quaternisation reaction may be obtained by diazotising an amine $DNH_2$ and reacting the diazonium compound with a compound of the formula (IV):

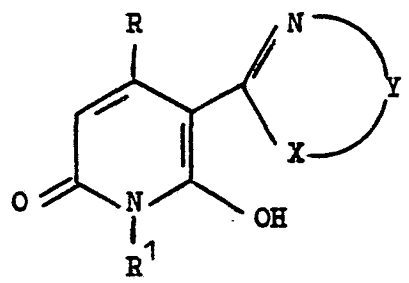

(IV)

wherein D, R, $R^1$, X and Y are as hereinbefore defined.

Examples of diazo components $DNH_2$ include aniline, o-, m- or p-toluidine, o-, m- or p-anisidine, o-, m- or p-chloroaniline, o-, m- or p-bromoaniline, o-, m- or p-nitroaniline, 2,5-dichloroaniline, 2,4-dinitroaniline, 2,4-dinitro-6-(chloro or bromo)-aniline, 4-methanesulphonylaniline, 4-aminobenzotrifluoride, 4- or 5-nitro-2-toluidine, 4- or 5-nitro-2-anisidine, 4- or 5-chloro-2-anisidine, 4- or 5-chloro-2-toluidine, 4- or 5-bromo-2-anisidine, 2,6-di(chloro or bromo)-4-nitroaniline, 2,4,6-trinitroaniline, 2,4-dinitro-6-carbomethoxyaniline, 2-amino-5-nitrobenzotrifluoride, 2,4-bis(methanesulphonyl) aniline, 2-(chloro or bromo)-4-nitroaniline, methylanthranilate, 4- or 5-nitromethylanthranilate, 4-aminobenzamide, 2,6-di(chloro or bromo)-aniline-4-sulphonamide, 2,6-di(chloro or bromo)-4-methylsulphonylaniline, 2,5-di(chloro or bromo)-4,6-dinitroaniline, 2-amino-3,5-dinitrobenzotrifluoride, 3-amino-2-(chloro or bromo)-4,6-dinitro-(toluene or anisole), 3-amino-4-(chloro or bromo)-2,6-dinitro-(toluene or anisole), 2- or 4-cyanoaniline, 4-nitro-2-cyanoaniline, 2,4-dinitro-6-cyanoaniline, 2-nitro-4-cyanoaniline, 2-chloro-4-cyanoaniline, 3-amino-2,4,6-trinitrotoluene, 2-(chloro or bromo)-4-methylsulphonylaniline, 3-(chloro or bromo)-4-thiocyanatoaniline, 2-(chloro or bromo)-4-sulphamylaniline, 2-amino-5-nitrophenylmethanesulphone, 2-amino-3,5-dinitrophenylmethylsulphone, 2-amino-3-(chloro or bromo)-5-nitrophenylmethylsulphone, 2-sulphamyl-4-nitroaniline, 2-methylsulphamyl-4-nitroaniline, 2-ethylsulphamyl-4-nitroaniline, 2-butylsulphamyl-4-nitroaniline, 2-dimethylsulphamyl-4-nitroaniline, 2-methylsulphamyl-4,6-dinitroaniline, 2-methylsulphamyl-4-nitro-6-(chloro or bromo)-aniline, 2-phenylsulphamyl-4-nitroaniline, methyl-2-amino-3-(chloro or bromo)-5-nitrobenzoate, dimethyl-2-aminoterephthalate, dimethyl-2-amino-5-nitroterephthalate, aniline-2-, 3- or 4-sulphamate, aniline-2-, 3- or 4-N,N-dimethylsulphamate, 4-aminobenzenesulphonamide, 2-nitro-4-methylaniline, 2-cyano-4-methylaniline, 4-chloro-2-methylaniline, 2-aminothiazole, 2-amino-6-methoxybenzthiazole, 2-amino-6-methylsulphonyl benzthiazole, 2-amino-6-nitrobenzthiazole, 2-aminobenzthiazole, 2,5-dimethoxyaniline, 2-amino-5-nitrothiazole, 2-amino-4-methyl-5-nitrothiazole, 2-amino-4-<u>m</u>-nitrophenyl-5-nitrothiazole, 3-methyl-5-amino-1,2,4-thiadiazole, 3-methylsulphonyl-5-amino-1,2,4-thiadiazole, 3-methylmercapto-5-amino-1,2,4-thiadiazole, 3-phenyl-5-amino-1,2,4-thiadiazole, 2-amino-1,3,4-thiadiazole, 2-amino-5-nitro-1,3,4-thiadiazole, 4-aminobenzene(2,5- or 3,5-dichloro)benzenesulphon-N,N-dimethylamide, 4-amino-3-chlorobenzenesulphon-N,N-dimethylamide, 5-chloro-2,4-bis-(N,N-dimethylaminosulphonyl)aniline, 2-chloro-5-cyanoaniline, 2-cyano-5-chloroaniline, 2,4-dicyanoaniline, 4-aminodiphenylamine, 4-aminodiphenylmethane, 4-aminodiphenylsulphone, 4-aminoazobenzene, 4-phenylazo-1-aminonaphthalene, 2-aminobenzenesulphon-N,N-dimethylamide, 2-trifluoromethylaniline, 2- or 4-aminobenzonitrile, 2-aminophenylmethyl or ethylsulphone and 4-chloro-2-trifluoromethylaniline.

Amines of the formula $DNH_2$ which contain a cationic group and may be used in the process of the invention include (4-aminophenylsulphonylamino)ethylpyridinium chloride, (4-amino-3-chlorophenylsulphonylamino)ethylpyridinium chloride, (4-amino-2,5-dichlorophenylsulphonylamino)ethylpyridinium chloride, (4-amino-3,5-dichlorophenylsulphonylamino)ethylpyridinium chloride, 4-aminophenacyl-trimethylammonium chloride, (3-amino-4-methylphenacyl)-trimethylammonium chloride, (4-amino-2-chlorophenacyl)-trimethylammonium chloride, (4-amino-2,5-dimethyl-phenacyl)ammonium chloride, (3-amino-4-methoxyphenacyl)-trimethylammonium chloride, (4-aminophenylaminocarbonyl)-methylpyridinium chloride, (4-aminophenylsulphonylamino)ethyl trimethylammonium chloride, N'-4-aminophenylcarbonylmethyl-N,N-dimethylhydrazinium chloride, 4-aminophenyloxyethylcarbonyloxy-ethylpyridinium chloride, <u>m</u>-aminophenyl-trimethylammonium chloride, 3-(4'-aminobenzoylamino)phenyl-trimethylammonium chloride, 3-(4'-aminophenylsulphonylamino)phenyl-trimethylammonium chloride, 4-aminophenylcarbonyloxyethyl-trimethylammonium chloride, 4-aminophenyl-methyl-trimethylammonium chloride, 3-aminophenyl-methyl-trimethylammonium chloride, 3-aminophenyl-methylpyridinium chloride, (3-aminophenylsulphonylamino)ethylpyridinium chloride, 3-aminophenacyl-trimethylammonium chloride, 3-aminophenyl-methylpyridinium chloride, 3-aminophenylaminocarbonyl-methyl-pyridinium chloride, 3-aminophenylsulphonylaminoethyl-trimethylammonium chloride, N'-3-aminophenylsulphonylaminoethyl-N,N-dimethylhydrazinium chloride, N'-3-aminophenacyl-N,N-dimethylhydrazinium chloride, 3-aminophenylmethyl-trimethylammonium chloride, N'-3-aminophenylmethyl-N,N-dimethylhydrazinium chloride,

3-aminophenylaminocarbonylmethyl trimethylammonium chloride,
N'-3-aminophenylaminocarbonylmethyl-N,N-dimethylhydrazinium chloride,
(4-aminophenylsulphonylamino)ethyl-2-methylpyridinium chloride,
4-aminophenylaminocarbonylmethyl-diethylsulphonium chloride,
4-aminophenyloxyethyl-methyl-ethylsulphonium chloride,
4-aminophenylthioethyl-trimethylammonium chloride,
4-aminophenacyl-isothiouronium chloride,
3-(β-4-aminophenoxyethylcarbonyl)-1-methyl-pyridinium chloride,
N'-4-aminophenylcarbamoylmethylidene-N,N,N-trimethylhydrazinium chloride.

Amines of the formula (V):

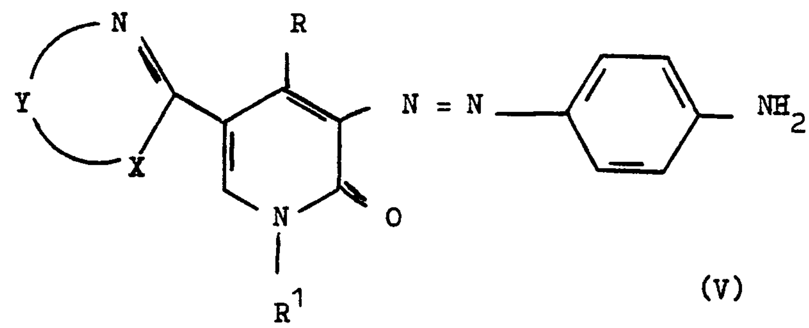

(V)

wherein R, $R^1$, X and Y have the meanings hereinbefore defined, may also be used.

According to a further aspect of the present invention there is provided a process for the manufacture of the dyestuffs of the invention which comprises diazotising an amine of the formula $DNH_2$ and reacting the diazo compound with a compound of the formula (VI):

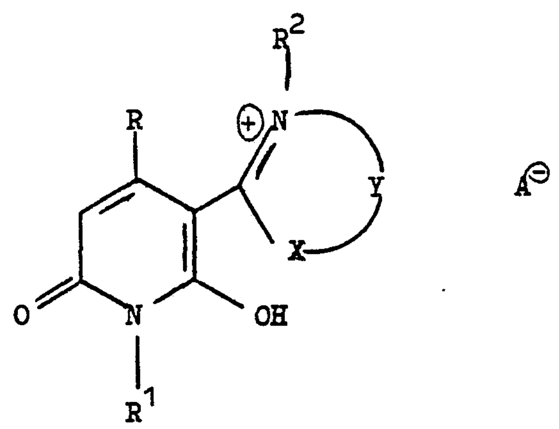

(VI)

wherein D, R, $R^1$, $R^2$, X, Y and $A^-$ are as hereinbefore defined.

**Thus in making the dyestuffs of the invention** a pyridone of formula (IV) may be coupled with a diazotised amine $DNH_2$ and the product quaternised or alternatively the pyridone may be quaternised and then coupled with a diazotised amine $DNH_2$.

In yet a further aspect of the present invention there is provided a process for the manufacture of coupling components of the formula (VII):

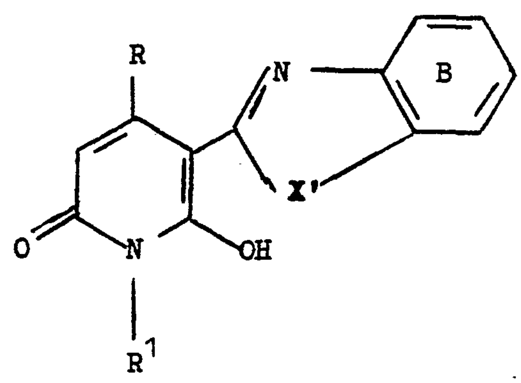

(VII)

wherein X' is sulphur or NH and R and $R^1$ have the meanings hereinbefore defined and the ring may be substituted,

which comprises reacting a 3-cyano pyridone of the formula (VIII):

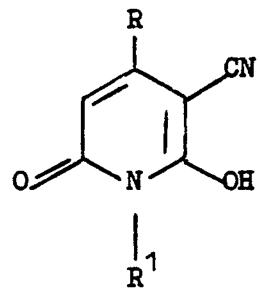

(VIII)

with an optionally substituted o-phenylene diamine or o-aminothiophenol as appropriate, in the presence of aluminium trichloride. When X' is NH the invention also includes the coupling components so obtained.

Coupling components of formula (VII) in which X' is oxygen are also novel and may be made by the above process but the dyestuffs obtained therefrom are unstable. They and their process of manufacture do not, therefore, form part of the present invention.

The benz ring B of the benziminazole moiety may be substituted with one or more substituents as hereinbefore described with respect to Y.

The reaction can be simply carried out by mixing together the two reactants with anhydrous aluminium chloride and heating at an elevated temperature, usually from 150 to 250°C and preferably from 175 to 220°C e.g. 190°C, for an hour or more. On completion of reaction the reaction product, which preferably is first ground, is conveniently added to iced hydrochloric acid and the precipitated solid isolated by filtration, dried and, if desired, purified by, for instance, recrystallisation from a suitable solvent such as aqueous dimethyl formamide.

The coupling component so obtained may be alkylated and quaternised and then reacted with the diazo component to form the dyestuffs of the invention; alternatively the neutral dyestuff may be first formed which is then itself alkylated and quaternised. In either case the N-substituents on a benziminazole moiety will be the same.

The dyestuffs of the invention, which have excellent solubility, are valuable for the colouration of paper and for the colouration of synthetic polymeric materials by application from an aqueous bath. The dyestuffs give valuable bright shades, mainly yellow, of very high tinctorial strength.

In particular the dyestuffs of the invention are valuable for colouring polyacrylonitrile materials and may be applied thereto from acid, neutral or slightly alkaline dyebaths (i.e. pH from 3-8) at temperatures between, for example, 40°C and 120°C, preferably between 80°C and 120°C or by printing techniques using thickened printing pastes. Greenish to reddish yellow dyeings of excellent fastness properties to washing, perspiration, steam-pleating and light are obtained. They also generally show good pH stability.

The majority of the dyestuffs of the invention possess a further advantage in that they have compatibility values in the range 2.5 to 3.5, i.e. about 3 as assessed by the method for the determination of compatibility values described in the Journal of the Society of Dyers and Colourists, Volume 87, No.2, p ge 60 (1971). Compatibility is assessed on a scale of 1 to 5 and dyers engaged in the dyeing of polyacrylonitrile materials show a strong preference for dyestuffs having a compatibility value

or C.V. value as it is known, of 2.5 to 3.5. Additionally, dyestuffs of C.V. 2.5 to 3.5 are compatible in dyeing properties with the large majority of mainstream commercial dyes used in the dyeing of polyacrylonitrile and the present dyestuffs are therefore advantageous for dyeing in admixture with known commercial dyestuffs for polyacrylonitrile.

The dyestuffs may also be used for the colouration of synthetic polymeric materials particularly polyacrylonitrile materials by wet transfer printing processes in which a support such as paper, is printed with an ink containing the dyestuff, the printed support is placed in contact with a textile material and the shole then subjected to heat and pressure under humid/wet conditions to transfer the dyestuff to the textile material.

The invention is illustrated by the following example in which all parts and percentages are by weight except where otherwise indicated.

Example 1

(A) Pyridone coupling component

17.8 Parts of 3-cyano-1-ethyl-2-hydroxy-4-methyl-pyrid-6-one, 10.8 parts of o-phenylenediamine and 15 parts of aluminium trichloride are mixed together and heated at 190°C for 5 hours then cooled to room temperature and finally added to 30 parts of ice and 12 parts of concentrated hydrochloric acid. The product is filtered off, dried, then recrystallised from dimethylformamide and has the constitution:

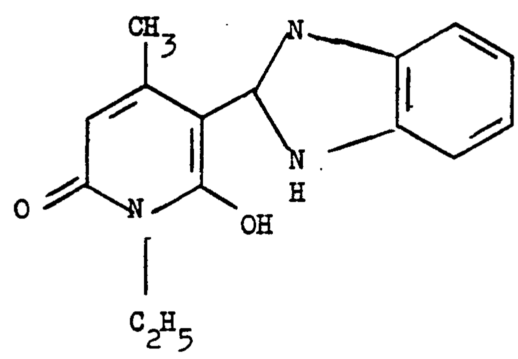

10 Parts of this product, 100 parts of 10% sodium hydroxide solution and 10.8 parts of dimethyl sulphate are stirred together at 60°C for 6 hours then cooled to room temperature. The product is filtered off and dried and has the constitution:

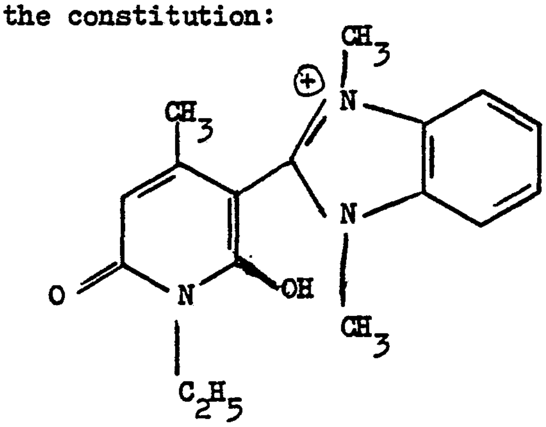

(B) Dyestuff

6.9 Parts of p-nitroaniline are diazotised and coupled with 14.9 parts of the pyridone from (A) above. The product is precipitated by adding 5 parts of sodium chloride and 2 parts of zinc chloride.

The product which has the constitution:

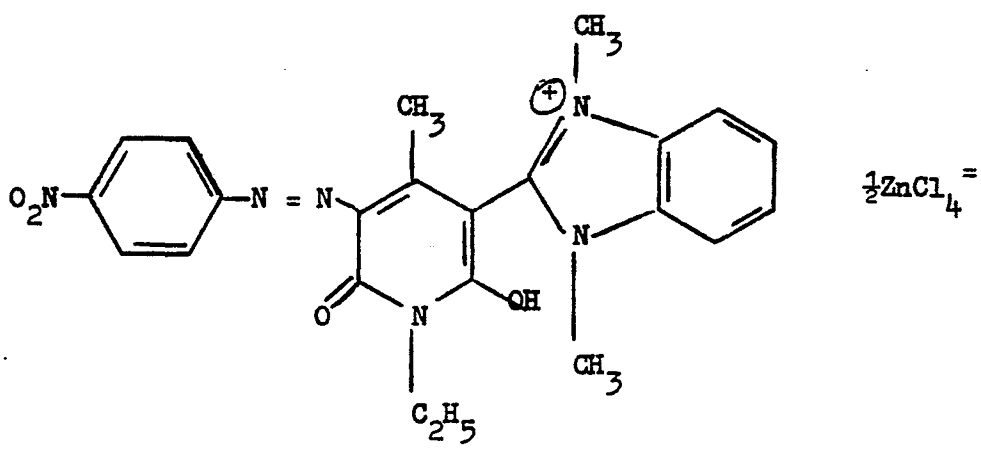

imparts a greenish-yellow shade to acrylic fibres which is very fast to light.

Examples 2-17

Pyridone Coupling Component

The coupling components listed in Table 1 were prepared in the following manner.

The appropriate 3-cyanopyridone (1 part) and 2-substituted aniline (1 part) were intimately mixed with anhydrous aluminium chloride (1.1 parts) and heated at 190°C for one hour. The reaction mixture was allowed to cool to room temperature and the resulting solid finely ground. This was added to ice and concentrated hydrochloric acid and stirred for half an hour. The product was filtered and recrystallised from aqueous dimethyl formamide.

Table 1

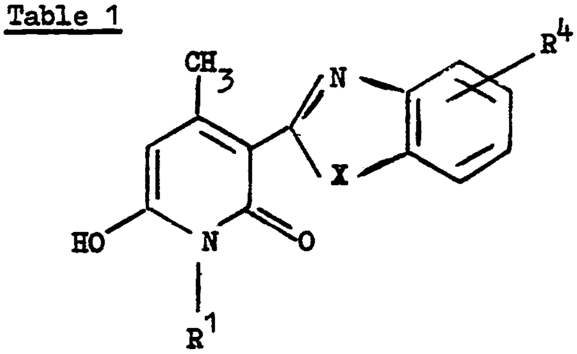

| Example | X | $R^1$ | $R^4$ |
|---|---|---|---|
| 2 | NH | H | H |
| 3 | NH | H | $CH_3$ |
| 4 | NH | $CH_3$ | H |
| 5 | NH | $CH_3$ | $CH_3$ |
| 6 | NH | $C_2H_5$ | $CH_3$ |
| 7 | NH | $C_2H_5$ | $C_2H_5$ |
| 8 | NH | $n-C_4H_9$ | H |
| 9 | NH | $n-C_4H_9$ | $CH_3$ |
| 10 | S | H | H |
| 11 | S | H | $CH_3$ |
| 12 | S | $CH_3$ | H |
| 13 | S | $CH_3$ | $CH_3$ |
| 14 | S | $C_2H_5$ | H |
| 15 | S | $C_2H_5$ | $CH_3$ |
| 16 | S | $n-C_4H_9$ | H |
| 17 | S | $n-C_4H_9$ | $CH_3$ |

Examples 18-36

The pyridones of Examples 1, 2 and 6 to 9 were alkylated and quaternised as described below and coupled with the appropriate diazo component to form the dyestuffs listed in Table 2.

Alkylation and Quaternisation of Heterocyclyl Pyridones

The appropriate pyridone (2 parts) was dissolved in sodium hydroxide (10%) solution and stirred at 60°C while the appropriate alkylating agent (5 parts) was added dropwise over $1\frac{1}{2}$ hours. The pH of the solution was maintained at 8 by further addition of sodium hydroxide solution (10%). The mixture was stirred for a further 8 hours at 60°C and cooled to room temperature. Hydrochloric acid was added to reduce the pH to 4 followed by a 1 to 1 mixture of sodium chloride and zinc chloride to fully precipitate the tetrachlorozincate salt. The salt was filtered and washed with brine (10%).

TABLE 2

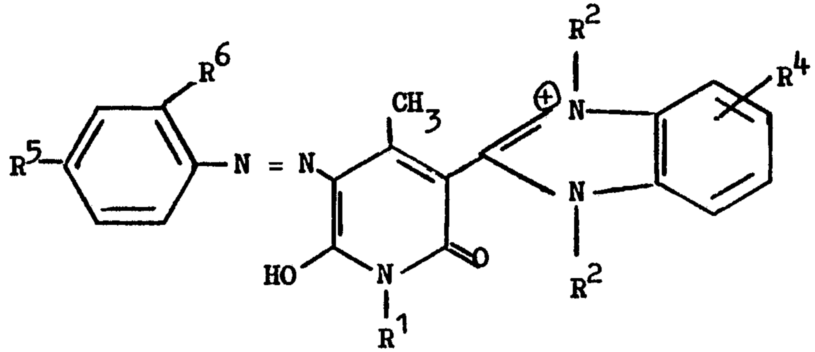

$\frac{1}{2}ZnCl_4^{=}$

| Example No. | $R^1$ | $R^2$ | $R^4$ | $R^5$ | $R^6$ | Shade |
|---|---|---|---|---|---|---|
| 18 | H | $CH_3$ | H | $NO_2$ | H | Greenish-yellow |
| 19 | $C_2H_5$ | " | H | " | H | " |
| 20 | " | $C_2H_5$ | $CH_3$ | " | H | " |
| 21 | n-$C_4H_9$ | $CH_3$ | H | " | H | " |
| 22 | $C_2H_5$ | " | H | Cl | H | " |
| 23 | " | " | H | H | Cl | " |
| 24 | " | " | H | H | H | Mid-yellow |
| 25 | " | " | H | $CH_3$ | H | " |
| 26 | " | " | $CH_3$ | " | $NO_2$ | " |

TABLE 2 (Continued)

| Example No. | $R^1$ | $R^2$ | $R^4$ | $R^5$ | $R^6$ | Shade |
|---|---|---|---|---|---|---|
| 27 | $C_2H_5$ | $CH_3$ | H | H | $CO.OC_2H_5$ | Mid-yellow |
| 28 | " | " | H | $OCH_3$ | $NO_2$ | Reddish-yellow |
| 29 | " | " | H | $NO_2$ | $OCH_3$ | " |
| 30 | $n-C_4H_9$ | " | H | $OCH_3$ | $NO_2$ | " |
| 31 | " | " | H | $NO_2$ | $OCH_3$ | " |
| 32 | " | " | H | H | " | " |
| 33 | " | $CH_2CH_2OH$ | H | 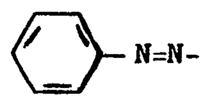 | H | " |
| 34 | " | " | $CH_3$ | " | H | " |
| 35 | $C_2H_5$ | " | $C_2H_5$ | " | H | " |
| 36 | " | $CH_3$ | H | " | H | Greenish-yellow |

## CLAIMS

1. An azo dyestuff, devoid of carboxylic acid and sulphonic acid groups, having the formula (I)

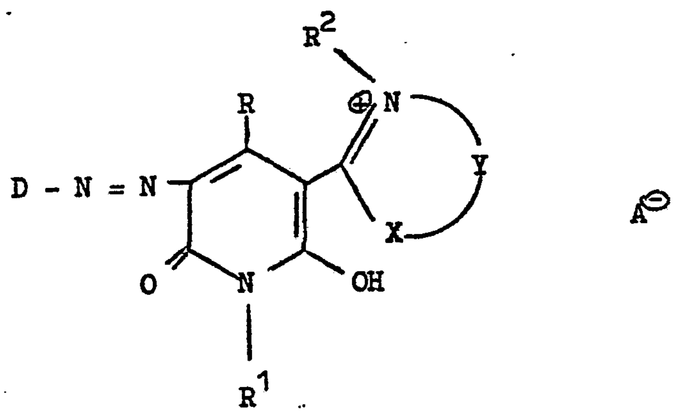

(I)

wherein D is an aromatic carbocyclic or aromatic heterocyclic radical, R is hydrogen, halogen, nitro, cyano, hydroxy, amino or an organic radical, $R^1$ is hydrogen or hydroxyl, an optionally substituted hydrocarbon or heterocyclic radical but not hydroxyalkyl having 2 or more carbon atoms, or optionally substituted amino, acylamino, acyloxy or alkoxy, X is sulphur or N-$R^3$, Y is the residue of a 5- or 6-membered ring which may have fused thereto a further carbocyclic or heterocyclic ring except that when X is sulphur Y may not be orthophenylene, $R^2$ and $R^3$, which may be the same or different, are hydrogen or optionally substituted alkyl, cycloalkyl, alkenyl, aryl or aralkyl, and $A^-$ is an anion.

2. An azo dyestuff as claimed in claim 1 in which X is N-$R^3$, Y is orthophenylene in which the benzene ring carries a substituent $R^4$, R is lower alkyl, $R^1$ and $R^4$, which are the same or different, are hydrogen or lower alkyl

and $R^2$ and $R^3$ , which are the same or different, are lower alkyl or hydroxy lower alkyl.

3. An azo dyestuff as claimed in claim 2 in which R is methyl, $R^1$ is hydrogen, methyl, ethyl or n-butyl, $R^4$ is hydrogen or methyl and $R^2$ and $R^3$ are the same and are methyl, ethyl or 2-hydroxyethyl.

4. An azo dyestuff as claimed in claim 3 in which D is p-nitrophenyl, R, $R^2$ and $R^3$ are methyl, $R^1$ is ethyl and $R^4$ is hydrogen.

5. A process for the manufacture of a dyestuff as claimed in claim 1 which comprises quaternising a compound of the formula:

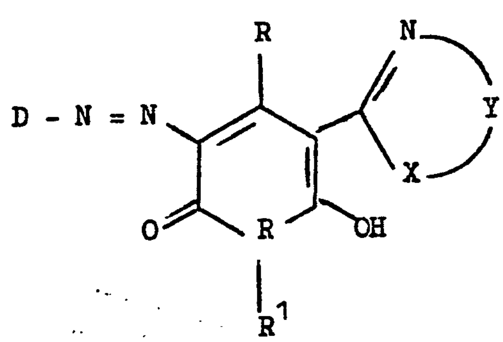

wherein D, R, $R^1$, X and Y have the meanings given in claim 1.

6. A process for the manufacture of a dyestuff as claimed in claim 1 which comprises diazotising an amine of the formula $DNH_2$ and reacting the diazo compound with a compound of the formula:

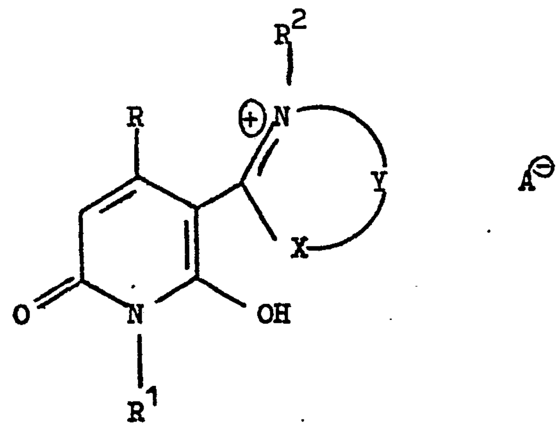

wherein D, R, $R^1$, $R^2$, X, Y and $A^-$ have the meanings given in claim 1.

7. A process for the manufacture of a coupling component of the formula:

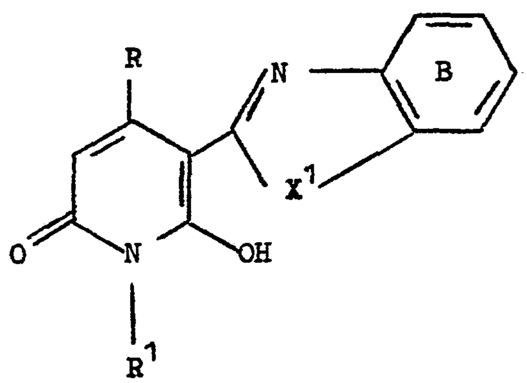

wherein $X^1$ is sulphur or NH, R and $R^1$ have the meanings given in claim 1 and the ring B is optionally substituted, which comprises reacting a 3-cyano pyridone of the formula:

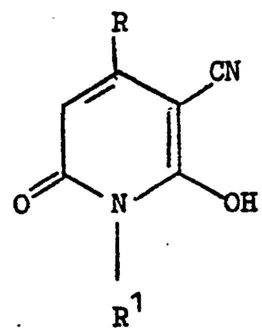

with an optionally substituted o-phenylene diamine or o-aminothiophenol, as appropriate, in the presence of aluminium trichloride.

8. A coupling component of the formula:

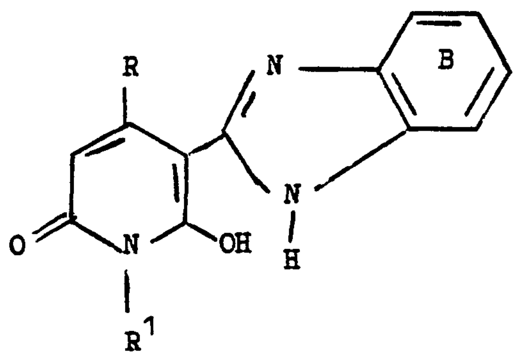

wherein R and $R^1$ have the meanings given in claim 1 and the ring B is optionally substituted.

MJH/BH
30.6.80.

European Patent Office

# EUROPEAN SEARCH REPORT

0023770

Application number
EP 80 30 2277

## DOCUMENTS CONSIDERED TO BE RELEVANT

| Category | Citation of document with indication, where appropriate, of relevant passages | Relevant to claim |
|---|---|---|
| | FR - A - 2 080 879 (SANDOZ)<br>* Claims 1-14; page 10, line 32 to page 11, line 8 *<br>-- | 1,5,6 |
| | DE - A - 2 500 064 (BASF)<br>* Claims 1-4 *<br>-- | 1,5,6 |
| | DE - A - 2 436 420 (BASF)<br>* Claims 1-3 *<br>-- | 8 |
| P | GB - A - 2 021 616 (ICI)<br>* Claims 1-9; page 5, lines 4-6 *<br>---- | 1,8 |

CLASSIFICATION OF THE APPLICATION (Int. Cl. 3)

C 09 B 44/08
C 07 D 401/04
417/04

TECHNICAL FIELDS SEARCHED (Int.Cl. 3)

C 09 B 44/08
44/02
C 07 D 401/04
417/04

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-08-1980 | GINESTET |

EPO Form 1503.1 06.78